# EUROPEAN PATENT SPECIFICATION

(11) **EP 1 114 956 B1**
(45) Date of publication and mention of the grant of the patent: **12.05.2004**
(21) Application number: 00830002.2
(22) Date of filing: 04.01.2000
(51) Int. Cl.: F16K 17/10

(54) **An overpressure valve**
Überdruckventil
Soupape de surpression

(43) Date of publication of application: 11.07.2001
(73) Proprietor: OIL CONTROL S.p.A., 20122 Milano (IT)
(72) Inventor: Storci, Andrea, 41015 Nonantola MO (IT)
(74) Representative: Gotra, Stefano

(56) References cited:
- DE-B- 1 256 494
- US-A- 2 619 112
- US-A- 3 613 716

## Description

The overpressure valve of the invention is made according to the specifications in the preamble to the first claim.

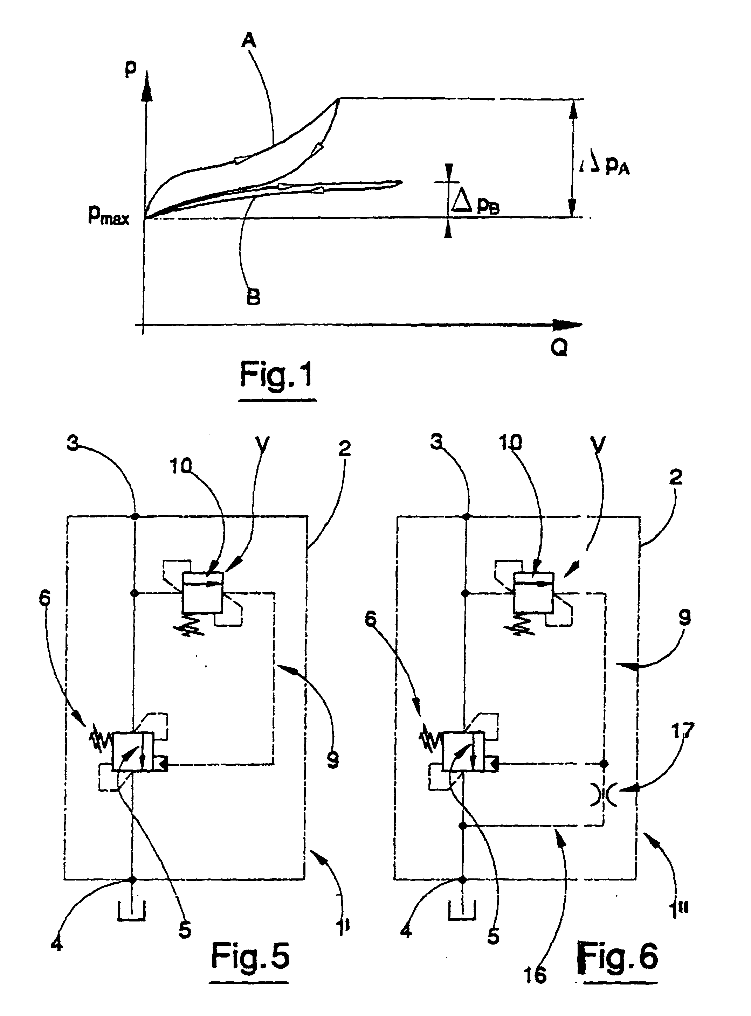

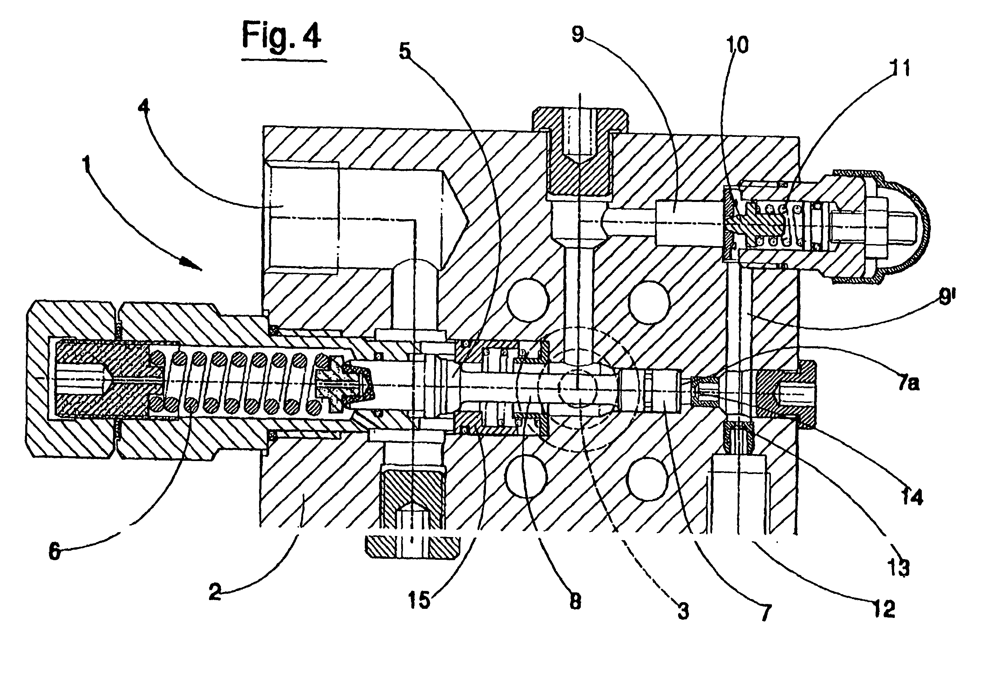

As is well known, valves of this type connect a pressurised environment with a discharge when the pressure in the environment exceeds a predetermined pressure Pₘₐₓ. In other words, these valves are safety valves acting so as to limit the pressure in an environment at risk of overpressure; they open automatically when pressure Pₘₐₓ is reached in the environment. Prior-art valves of this type, however, have the drawback that on opening there is a certain and considerable increase in the pressure due to the increase in fluid head passing through the valve. Owing to this phenomenon, represented clearly in the curve denoted by A in figure 1, the various structural components connected to the valve (pipes, actuators, other valves etc.) have to be oversized with respect to maximum pressure Pₘₐₓ at which the valve opens, in order to cope with overpressure Δp.

The main aim of the present invention is to obviate the above-mentioned drawback in the prior art by providing a valve, of the type described, in which the overpressure Δp caused on valve opening is considerably lower than that found in prior-art valves.

An advantage of the invention is that it has relatively low hysteresis.

Another advantage of the invention is that it provides a simple, economical, extremely reliable and very stable valve.

A further aim of the invention is to provide a safety device for controlling the lowering of a load, in which, when the valve opens due to an overload situation arising, the pressure increase (with respect to rated Pₘₐₓ valve opening) on valve opening is relatively contained.

Thanks to the invention, a control device can be made which enables the load-lowering manoeuvre to begin gradually and smoothly.

These aims and advantages and more besides are all attained by the present invention, as it is characterised in the appended claims.

Further characteristics and advantages of the present invention will better emerge from the detailed description that follows of some preferred but non-exclusive embodiments of the invention, illustrated purely by way of a nonlimiting example in the accompanying figures of the drawings, in which:
figure 1 shows two curves A and B which describe the progress of the pressure levels in the valve according to the head crossing through the valve, respectively for a known valve and for the valve of the invention;
figure 2 is a diagram of a first embodiment of the valve according to the present invention;
figure 3 is a partially-sectioned lateral view of the valve of figure 2;
figure 4 is section IV-IV of figure 3;
figure 5 is a diagram of a second embodiment of the valve of the invention;
figure 6 is a diagram of a third embodiment of the valve of the invention;
figure 7 is a safety device for controlling the descent of a load, comprising the valve of figures 2, 3 and 4;
figure 8 is a safety device for controlling the descent of a load, comprising a fourth embodiment of the valve of the invention.

Figure 1 shows two curves, denoted by A and B, relating to the progress of pressure p according to the head Q present in a direct overpressure valve of known type (curve A); and in a valve according to the invention (curve B). The overpressure Δp_{A} (with respect to maximum rated pressure Pₘₐₓ for valve opening) in the known valve is decidedly higher than that for overpressure Δp_{B} of the valve of the invention. Furthermore, the hysteresis in the valve of the invention is considerably lower than that in the known valve.

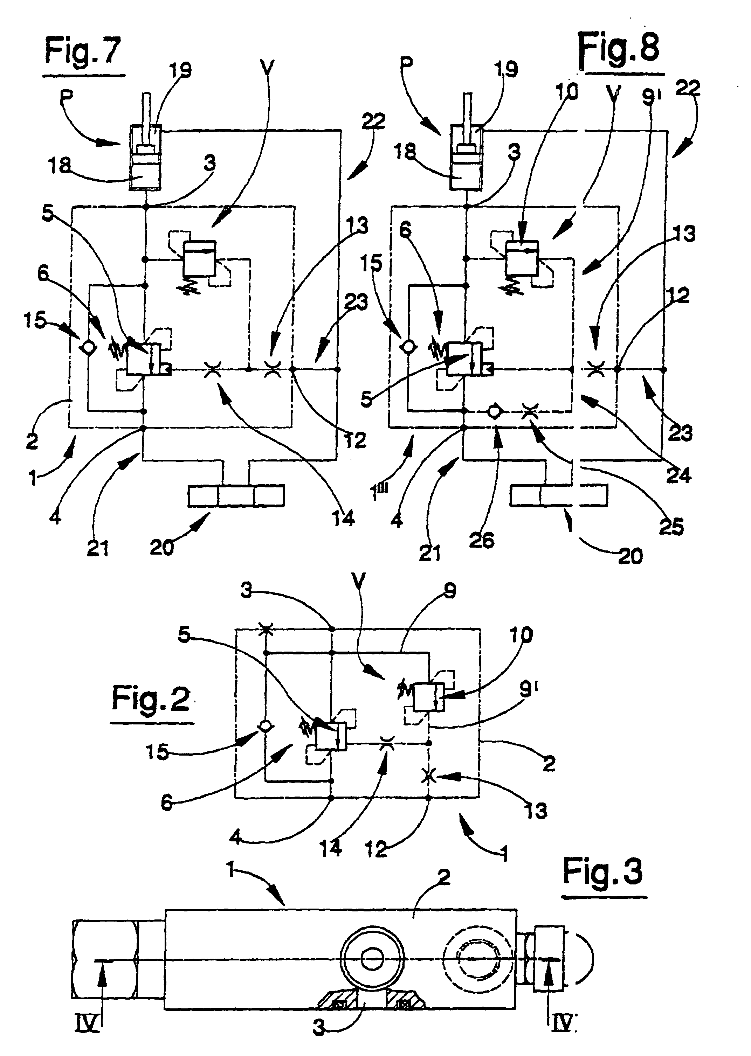

With reference to figures 2, 3 and 4, 1 denotes in its entirety an overpressure valve, comprising a valve body 2 having a first connection 3 for inlet of a pressurised fluid, and a second connection 4 for discharge of the fluid to the outside.

The valve 1 comprises a first obturator 5, internal of the valve body 2, operating between the first and second connections 3 and 4, and being axially mobile. A spring 6 acts directly on the obturator 5 to close it while the pressurised fluid present in the first connection 3 acts to open it. The first obturator 5, normally closed by the spring 6, is destined on to open by effect of exceeding a predetermined maximum pressure Pₘₐₓ of the fluid at the first connection 3.

The valve 1 is provided with a cursor 7, internally of the valve body 2, which is mobile coaxially and solidly with the first obturator 5 and has an end surface 7a facing in the opposite direction to the opening side of the first obturator 5 (in figure 4, the first obturator 5 opens left side, while the end surface 7a faces right). The cursor 7 is solidly connected to the first obturator 5 by means of a coaxial stem 8 internal of the valve body 2.

Inside the valve body 2 is located at least one pilot conduit 9, 9' which places the first connection 3 in communication with the cursor end surface 7a.

A safety valve V is predisposed in the pilot conduit 9, 9'; the safety valve V is provided with a second obturator 10, which obturator 10 is located internally of the valve body 2 and is normally closed by action of an adjustable spring 11, and will open by effect of a predetermined pressure p₁ of the fluid at the first connection 3, which pressure p₁ will not be higher than pressure Pₘₐₓ at which the first obturator 5 opens. Preferably the springs 6 and 11 of the first and second obturators are calibrated so that the opening pressure p₁ of the second obturator 10 is lower than the opening pressure Pₘₐₓ of the first obturator 5.

The valve body 2 externally exhibits a third connection 12, for connection with a pilot pressure. The third connection 12 communicates through a first choke section 13 with a tract 9' of the pilot conduit comprised between the second obturator 10 and the cursor end surface 7a. A second choke section 14 is present in the tract 9' of pilot conduit, situated at a point comprised between the first choke section 13 and the cursor end surface 7a.

A single-acting valve 15 is located inside the valve body 2 and is predisposed parallel to the first obturator 5 in order to enable a flow from the second connection 4 to the first connection 3.

Figure 5 is a diagram of a second embodiment of the overpressure valve of the invention, denoted by 1', in which the same elements also present in the valve of figures 2, 3 and 4 are indicated by the same numbers.

The valve 1' comprises a first obturator 5 closed by a spring 6 and opened by the pressure present in a first connection 3 or inlet. The valve 1' is opened by means of a pilot conduit 9 which reads the pilot pressure at the first connection 3; a valve V acts on the pilot conduit 9, which valve V is equipped with a second obturator 10 closed by a spring calibrated to a lower pressure with respect to the first obturator 5. Constructionally the valve 1' of figure 5 comprises all of the elements of the valve in figures 3 and 4 numbered from 2 to 11. It does not comprise the third pilot connection 12, the two choke sections 13 and 14, and the single-acting valve 15.

In a third embodiment illustrated in figure 6, a valve 1" comprises all the elements of the valve 1' of figure 5 and also includes a discharge conduit 16 which connects the pilot conduit 9 with the second connection 4. At least one choke section 17 is predisposed along the discharge conduit 16, to guarantee reclosing of the first obturator 5 with a relatively small hysteresis.

Figure 7 schematically shows a device for controlling lowering of a load, which could be applied for example to the arm of a crane, which device comprises at least one hydraulic linear actuator P having a first chamber 18 which is operatively associated to the lifting of a load and a second chamber 19 operatively associated to the lowering of a load.

The device comprises a hydraulic transmission circuit of an operative fluid provided with at least one distributor 20 having a first branch 21 which connects the distributor 20 to the first chamber 18 and a second branch 22 which connects the distributor 20 to the second chamber 19.

The overpressure valve 1 of figures 2, 3 and 4 is predisposed on the first branch 21; the first connection 3 is connected to the first chamber 18, the second connection 4 is connected to the distributor 20 and the third connection 12 is connected through a pilot branch 23 to the second branch 22 of the hydraulic transmission circuit. In figure 7 the second choke section 14 of the overpressure valve 1 is preferable but not necessary.

Figure 8 shows a device for controlling the descent of a load (borne for example by a crane arm or another load lifting vehicle) comprising a direct overpressure valve 1'", made according to a fourth embodiment, in which a discharge conduit 24 connects a tract 9' of the pilot conduit comprised between the second obturator 10 and the end surface 7a of the cursor to the second connection 4; at least one choke section 25 and a single-acting valve 26 are predisposed along the discharge conduit 24.

During operation of all of the above-described overpressure valves, 1, 1', 1", 1'", when the pressurised environment connected to the first connection 3 reaches the calibrated pressure of the spring 11 (due to a situation causing overpressure), the second obturator 10 opens automatically and the end surface 7a of the cursor comes into communication with the first connection 3 through the pilot conduit 9, 9'. When the pressure rises to reach the spring 6 calibration setting value, the first obturator 5 opens, setting the first connection 3 in communication with the second (discharge) connection 4. It has been found that when the obturator 5 opens, the pressure p in the valve in relation to the head Q of fluid is as described by curve B in figure 1. Thanks to the invention both initial overpressure Δp_{B} and hysteresis are reduced.

During normal operation of the devices illustrated in figures 7 and 8, the valves 1 and 1'", through connection with the pilot conduit 23, act as normal balance valves, with the second obturator 10 closed. In anomalous situations (such as overpressure due to external causes, causing overpressure in the first chamber 18) the valves 1 and 1'" function as previously described, with overpressure Δp_{B} and hysteresis greatly reduced.

The invention thus enables an externally-piloted (though the conduit 23) balance valve to be realised, for control of load lowering and able most efficiently to protect the system against undesired overpressures.

## Claims

1. An overpressure valve, comprising:
a valve body (2) having a first connection (3) for inlet of a pressurised fluid and a second connection (4) for discharge of a fluid from the valve;
a first obturator (5), axially mobile internal of the valve body (2) and operating between the first connection (3) and the second connection (4); a spring (6) closing the first obturator (5) and the pressurised fluid at the first connection (3) opening the first obturator (5); the first obturator (5) being destined to open by effect of a predetermined maximum pressure (Pₘₐₓ) of the pressurised fluid at the first connection (3);
**characterised in that** it further comprises:
a cursor (7), internal of the valve body (2) and mobile coaxially and solidly with the first obturator (5), having an end surface (7a) facing in an opposite direction with respect to a direction of opening of the first obturator (5); at least one pilot conduit (9, 9'), internal of the valve body (2),
a second obturator (10), internal of the valve body (2), predisposed in the pilot conduit (9, 9'), which second obturator (10) is normally closed thereby preventing communication between the first connection (3) and the end surface (7a) of the cursor (7), and is destined to open by effect of a predetermined pressure (pi) of the pressurised fluid present at the first connection (3) which predetermined pressure (p₁) is not greater than the maximum pressure (Pₘₐₓ) of opening of the first obturator (5) thereby enabling communication between the first connection (3) and the end surface (7a) of the cursor (7)

2. The valve of claim 1, **characterised in that** the cursor (7) is solidly connected to the first obturator (3) by a coaxial stem (8) which is internal of the valve body (2).

3. The valve of claim 1 or 2, **characterised in that** the second obturator (10) is predisposed to open by effect of a pressure (p₁) which is lower than a maximum opening pressure (Pₘₐₓ) of the first obturator (5).

4. The valve of any one of the preceding claims, **characterised in that** it comprises a discharge conduit (16) which connects the pilot conduit (9) with the second connection (4); at least one choke section (17) being predisposed along the discharge conduit (16).

5. The valve of any one of the preceding claims, **characterised in that** the valve body (2) is externally provided with a third connection (12), which is a pilot connection and communicates through a first choke section (13) with a tract (9') of the pilot conduit (9) comprised between the second obturator (10) and the end surface (7a) of the cursor (7).

6. The valve of claim 5, **characterised in that** it comprises a second choke section (14) predisposed on the pilot conduit (9') at a point thereof comprised between the first choke section (13) and the end surface (7a) of the cursor (7).

7. The valve of claim 5 or 6, **characterised in that** it comprises a discharge conduit (24) which connects a tract (9') of the pilot conduit comprised between the second obturator (10) and the end surface (7a) of the cursor (7) with the second connection (4); at least one choke section (25) and a single-acting valve (26) being predisposed along the discharge conduit (24).

8. A device for controlling lowering of a load, comprising:
at least one hydraulic actuator (P) having a first chamber (18) associated to a lifting of a load and a second chamber (19) associated to a lowering of a load;
an operative fluid transmission circuit provided with at least one distributor (20) having a first branch (21) connecting the distributor (20) with the first chamber (18) and having a second branch (22) connecting the distributor (20) with the second chamber (19);
an overpressure valve (1, 1"') predisposed on the first branch (21), comprising:
a valve body (2) having a first connection (3) to the first chamber (18) and a second connection (4) to the distributor (20); a first obturator (5), internal of the valve body (2), operating between the first connection (3) and the second connection (4), being axially mobile and being closed by a spring (6) and opened by pressurised fluid at the first connection (3); the first obturator (5) being destined to open by effect of a predetermined maximum pressure (Pmax) of the pressurised fluid at the first connection (3);
a single-acting valve (15), internal of the valve body (2), predisposed parallel to the first obturator (5) in order to enable flow from the second connection (4) to the first connection (3);
**characterised in that**:
the overpressure valve (1, 1''') is made according to any one of the claims from 5 to 7, in which the third and pilot connection (12) is connected to the second branch (22) of the hydraulic transmission circuit.

## Patentansprüche

1. Überdruckventil, enthaltend:
- einen Ventilkörper (2) mit einem ersten Anschluss (3) für den Einlass einer unter Druck stehenden Flüssigkeit und einem zweiten Anschluss (4) zum Ablassen einer Flüssigkeit aus dem Ventil;
- ein erstes Absperrorgan (5), das axial im Inneren des Ventilkörpers (2) beweglich ist und zwischen dem ersten Anschluss (3) und dem zweiten Anschluss (4) arbeitet; wobei eine Feder (6) das erste Absperrorgan (5) verschliesst und die unter Druck stehende Flüssigkeit an dem ersten Anschluss (3) das erste Absperrorgan (5) öffnet; und wobei das Absperrorgan (5) dazu bestimmt ist, sich durch die Wirkung einer vorgegebenen Höchstdruckes (Pₘₐₓ) der unter Druck stehenden Flüssigkeit an dem ersten Anschluss (3) zu öffnen;
**dadurch gekennzeichnet, dass** es ausserdem enthält:
- einen Schieber (7) im Inneren des Ventilkörpers (2), beweglich koaxial und in Verbindung mit dem ersten Absperrorgan (5), welcher eine Endfläche (7a) aufweist, die im Verhältnis zu einer Öffnungsrichtung des ersten Absperrorgans (5) einer entgegengesetzten Richtung zugewandt ist;
- wenigstens eine Steuerleitung (9, 9') im Inneren des Ventilkörpers (2), ein zweites Absperrorgan (10) im Inneren des Ventilkörpers (2), vorgesehen in der Steuerleitung (9, 9'), welches zweite Absperrorgan (10) normalerweise geschlossen ist, wodurch eine Verbindung zwischen dem ersten Anschluss (3) und der Endfläche (7a) des Schiebers (7) verhindert wird, und das dazu bestimmt ist, sich durch die Wirkung eines vorgegebenen Druckes (p₁) der unter Druck stehenden Flüssigkeit zu öffnen, vorhanden an dem ersten Anschluss (3), welcher vorgegebene Druck (p₁) nicht höher ist als der Höchstdruck (Pₘₐₓ) zum Öffnen des ersten Absperrorgans (5), wodurch die Verbindung zwischen dem ersten Anschluss (3) und der Endfläche (7a) des Schiebers (7) ermöglicht wird.

2. Ventil nach Patentanspruch 1 , **dadurch gekennzeichnet, dass** der Schieber (7) mit dem ersten Absperrorgan (5) durch einen koaxialen Schaft (8) fest verbunden ist, welcher sich im Inneren des Ventilkörpers (2) befindet.

3. Ventil nach Patentanspruch 1 oder 2, **dadurch gekennzeichnet, dass** das zweite Absperrorgan (10) dazu vorgesehen ist, sich durch die Wirkung eines Druckes (p₁) zu öffnen, der geringer ist als der Höchstdruck (Pₘₐₓ) zum Öffnen des ersten Absperrorgans (5).

4. Ventil nach einem beliebigen der vorstehenden Patentansprüche, **dadurch gekennzeichnet, dass** es eine Ablassleitung (16) enthält, welche die Steuerleitung (9) mit dem zweiten Anschluss (4) verbindet; wobei entlang der Ablassleitung (16) wenigstens ein Drosselabschnitt ( 17) vorgesehen ist.

5. Ventil nach einem beliebigen der vorstehenden Patentansprüche, **dadurch gekennzeichnet, dass** der Ventilkörper (2) aussen mit einem dritten Anschluss (12) versehen ist, welcher ein Steueranschluss ist und über einen ersten Drosselabschnitt (13) mit einer Strecke (9') der Steuerleitung (9) in Verbindung steht, die zwischen dem zweiten Absperrorgan (10) und der Endfläche (7a) des Schiebers (7) enthalten ist.

6. Ventil nach Patentanspruch 5, **dadurch gekennzeichnet, dass** es einen zweiten Drosselabschnitt (14) enthält, angeordnet an der Steuerleitung (9') an einem Punkt derselben, der zwischen dem ersten Drosselabschnitt (13) und der Endfläche (7a) des Schiebers (7) enthalten ist.

7. Ventil nach Patentanspruch 5 oder 6, **dadurch gekennzeichnet, dass** es eine Ablassleitung (24) enthält, welche eine Strecke (9') der Steuerleitung, enthalten zwischen dem zweiten Absperrelement (10) und der Endfläche (7a) des Schiebers (7), mit dem zweiten Anschluss (4) verbindet; wobei entlang der Ablassleitung (24) wenigstens ein Drosselabschnitt (25) und ein Einrichtungsventil (26) vorgesehen sind.

8. Vorrichtung zum Steuern des Senkens einer Last, enthaltend:
- wenigstens einen Hydrauliktrieb (P) mit einer ersten Kammer (18), die dem Heben einer Last zugeordnet ist, und mit einer zweiten Kammer (19), die dem Senken einer Last zugeordnet ist;
- ein Übertragungsweg einer Betriebsflüssigkeit, versehen mit wenigstens einem Verteiler (20), der eine erste Abzweigung (21) aufweist, welche den Verteiler (20) mit der ersten Kammer (18) verbindet, sowie eine zweite Abzweigung (22), welche den Verteiler (20) mit der zweiten Kammer (19) verbindet;
- ein Überdruckventil (1, 1"'), angeordnet an der ersten Abzweigung (21), enthaltend:
- einen Ventilkörper (2) mit einem ersten Anschluss (3) an die erste Kammer (18) und einem zweiten Anschluss (4) an den Verteiler (20); ein erstes Absperrorgan (5) im Inneren des Ventilkörpers (2), welches zwischen dem ersten Anschluss (3) und dem zweiten Anschluss (4) arbeitet, axial beweglich ist und durch eine Feder (6) geschlossen und durch eine unter Druck stehende Flüssigkeit an dem ersten Anschluss geöffnet wird; wobei das erste Absperrorgan (5) dazu bestimmt ist, sich durch die Wirkung eines vorgegebenen Höchstdruckes (Pₘₐₓ) der unter Druck stehenden Flüssigkeit an dem ersten Anschluss (3) zu öffnen;
- ein Einrichtungsventil (15) im Inneren des Ventilkörpers (2), angeordnet parallel zu dem ersten Absperrorgan (5), um den Fluss von dem zweiten Anschluss (4) zu dem ersten Anschluss (3) zu ermöglichen;
**dadurch gekennzeichnet, dass** das Überdruckventil (1, 1''') nach einem beliebigen der Patentansprüche von 5 bis 7 ausgeführt ist, und bei welchem der dritte Steueranschluss (12) mit der zweiten Abzweigung (22) des hydraulischen Übertragungskreises verbunden ist.

## Revendications

1. Soupape de surpression comprenant:
- un corps de soupape (2) ayant une première connexion (3) pour l'entrée d'un fluide sous pression et une seconde connexion (4) pour l'évacuation d'un fluide de la valve;
- un premier obturateur (5), mobile axialement à l'intérieur du corps de soupape (2) et opérant entre la première connexion (3) et la seconde connexion (4); un ressort (6) fermant le premier obturateur (5) et le fluide sous pression sur la première connexion (3) ouvrant le premier obturateur (5); le premier obturateur (5) étant destiné à s'ouvrir par effet d'une pression maximum (Pₘₐₓ) prédéterminée du fluide sous pression sur la première connexion (3);
**caractérisée en ce qu'**elle comprend en outre:
- un clapet (7), interne au corps de soupape (2) et mobile coaxialement et solidairement au premier obturateur (5), ayant une surface d'extrémité (7a) orientée dans une direction opposée à la direction d'ouverture du premier obturateur (5);
- au moins un conduit de pilotage (9, 9'), interne au corps de soupape (2);
- un second obturateur (10), interne au corps de soupape (2), prédisposé dans le conduit de pilotage (9, 9'), lequel second obturateur (10) est normalement fermé, en prévenant ainsi toute communication entre la première connexion (3) et la surface d'extrémité (7a) du curseur (7), et est destiné à s'ouvrir par effet d'une pression (p₁) prédéterminée du fluide sous pression présent sur la première connexion (3), laquelle pression (p₁) prédéterminée n'est pas supérieure à la pression maximum (Pₘₐₓ) d'ouverture du premier obturateur (5), en permettant ainsi la communication entre la première connexion (3) et la surface d'extrémité (7a) du clapet (7).

2. Soupape selon la revendication 1, **caractérisée en ce que** le clapet (7) est solidairement connecté au premier obturateur (3) par une tige coaxiale (8) interne au corps de soupape (2).

3. Soupape selon la revendication 1 ou 2, **caractérisée en ce que** le second obturateur (10) est prédisposé pour s'ouvrir par effet d'une pression (p₁) inférieure à une pression maximum d'ouverture (Pₘₐₓ) du premier obturateur (5).

4. Soupape selon n'importe laquelle des revendications précédentes, **caractérisée en ce qu'**elle comprend un conduit d'évacuation (16) qui connecte le conduit de pilotage (9) à la seconde connexion (4); au moins une section d'étranglement (17) étant prédisposée le long du conduit d'évacuation (16).

5. Soupape selon n'importe laquelle des revendications précédentes, **caractérisée en ce que** le corps de soupape (2) est pourvu extérieurement d'une troisième connexion (12), qui est une connexion de pilotage et communique au travers d'une première section d'étranglement (13) avec une partie (9') du conduit de pilotage (9) comprise entre le second obturateur (10) et la surface d'extrémité (7a) du clapet (7).

6. Soupape selon la revendication 5, **caractérisée en ce qu'**elle comprend une seconde section d'étranglement (14) prédisposée sur le conduit de pilotage (9') en un point compris entre la première section d'étranglement (13) et la surface d'extrémité (7a) du clapet (7).

7. Soupape selon la revendication 5 ou 6, **caractérisée en ce qu'**elle comprend un conduit d'évacuation (24) qui connecte une partie (9') du conduit de pilotage, comprise entre le second obturateur (10) et la surface d'extrémité (7a) du clapet (7), avec la seconde connexion (4); au moins une section d'étranglement (25) et une valve unidirectionnelle (26) étant prédisposées le long du conduit d'évacuation (24).

8. Dispositif pour le contrôle de la descente d'une charge, comprenant:
- au moins un actionneur hydraulique (P) ayant une première chambre (18) associée au soulèvement d'une charge et une seconde chambre (19) associée à l'abaissement d'une charge;
- un circuit de transmission d'un fluide opératif pourvue d'au moins un distributeur (20) ayant un premier branchement (21) connectant le distributeur (20) à la première chambre (18) et ayant un second branchement (22) connectant le distributeur (20) à la seconde chambre (19);
- une soupape de surpression (1, 1''') prédisposée sur le premier branchement (21), comprenant: un corps de soupape (2) ayant une première connexion (3) à la première chambre (18) et une seconde connexion (4) au distributeur (20); un premier obturateur (3), interne au corps de soupape (2), opérant entre la première connexion (3) et la seconde connexion (4), étant axialement mobile et étant fermé par un ressort (6) et ouvert par un fluide pressurisé sur la première connexion (3); le premier obturateur (5) étant destiné à s'ouvrir par effet d'une pression maximum prédéterminée (Pₘₐₓ) du fluide pressurisé sur la première connexion (3);
- une valve unidirectionnelle (15), interne au corps de soupape (2), prédisposée parallèlement au premier obturateur (5) de manière à permettre le flux de la seconde connexion (4) à la première connexion (3);
**caractérisé en ce que**:
la soupape de surpression (1, 1''') est réalisée selon n'importe laquelle des revendications 5 à 7, dans laquelle la troisième connexion de pilotage (12) est connectée au second branchement (22) du circuit de transmission hydraulique.
